**Europäisches Patentamt**

**European Patent Office**

**Office européen des brevets**

(19)

(11) **EP 1 292 111 A1**

(12) **EUROPEAN PATENT APPLICATION**
published in accordance with Art. 158(3) EPC

(43) Date of publication:
**12.03.2003 Bulletin 2003/11**

(51) Int Cl.⁷: **H04N 1/387**, B41J 29/38,
B41J 29/40, B41J 21/00

(21) Application number: **00931669.6**

(22) Date of filing: **02.06.2000**

(86) International application number:
**PCT/JP00/03584**

(87) International publication number:
**WO 01/095610 (13.12.2001 Gazette 2001/50)**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **V-Sync Co., Ltd.**
**Tokyo 150-0001 (JP)**

(72) Inventors:
• **KUDOU, Takeo**
**Meguro-ku, Tokyo 152-0002 (JP)**
• **IBE, Takaya**
**Oomiya-shi, Saitama 330-0843 (JP)**

• **SHIROTA, Kazunari**
**Tokyo 177-0035 (JP)**
• **MASUDA, Yoshihiro**
**Tokyo 150-0001 (JP)**
• **ISHIBASHI, Yoshimitsu**
**Tokyo 176-0002 (JP)**
• **TAKEDA, Kazuya**
**Higashiyamato-shi, Tokyo 207-0033 (JP)**

(74) Representative: **Shindler, Nigel**
**Brookes Batchellor**
**102-108 Clerkenwell Road**
**London EC1M 5SA (GB)**

(54) **PRINTER WITH ADVERTISEMENT ISSUANCE FUNCTION**

(57)     The printing system with advertisement publishing function of the present invention provides a user with advertisement information also printed in a blank space portion of an original when printing the original information on a printing paper. Also, when copying the original with the printed advertisement information, the printing paper is printed with deletion of the printed advertisement information, namely original condition of the original information is recovered. The printed advertisement includes various information the user can select. According to the user's selection, a various kind of and much advertisement information, which it too much to print on one sheet of printing paper, can be printed on one or more sheets of printing paper, so that the present system can provide the user with more detailed advertisement information. Further, the present system has accounting means for charging an advertiser in connection with a publication of the advertisement, and for decreasing rental fee of the present printing system with the user in connection with the publication of the advertisement. In such a way, the present system not only prints the original information, but also prints with the advertisement information, so that a new advertisement-propaganda environment can be created.

FIG.1

EP 1 292 111 A1

Printed by Jouve, 75001 PARIS (FR)

## Description

## Field of the Invention

The present invention relates to a printing system with an advertisement publishing function such as a copying machine, a printer, and a facsimile terminal equipment provided with the advertisement publishing function, respectively.

## Background of the Invention

Conventionally, an apparatus with a printing function such as a copying machine, a printer, and a facsimile terminal equipment has come into wide use whether for home or business.

The conventional copying machine has optically read an original, and transferred the read out information of the original onto a copying paper to copy-print the original.

The conventional printer has printed printing data such as image data or character data supplied from a computer onto a printing paper.

The conventional facsimile terminal equipment has printed receive data comprising image data or character data transmitted through a communication line onto a printing paper.

However, these conventional printing apparatuses have been developed mainly in order to exactly print the information predetermined by a user onto a sheet, that is, have just functions as a dedicated machine for achieving the predetermined purpose, respectively.

Moreover, a complex printing machine combining each function of the copying machine, printer and facsimile terminal equipment has also been developed, but this complex machine also just combines each dedicated function of the conventional copying machine, printer, and facsimile terminal equipment, and namely does not contain a new excellent function.

The present invention is created from a viewpoint of the above mentioned problem, an object of which is to provide a printing system with a new excellent function the conventional printing apparatuses do not include.

## Summary of the Invention

The invention as described in claim 1 is a printing system with advertisement publishing function characterized by printing means for printing on a printing paper based on printing data; storing means for storing advertisement data; and signal processing means for generating the printing data combining print main data and the advertisement data stored in the storing means when the print main data is supplied, wherein the printing means prints upon the printing paper based on the printing data generated by a combination of the advertisement data and the print main data, so that the printing paper can be printed attaching a printing portion based on the advertisement data to a printing portion based on the print main data.

The invention as described in claim 2 premised on claim 1 or 2 is a printing system with advertisement publishing function characterized by reading means for reading an original to be copied, and thereby generating the print main data.

The invention as described in claim 3 premised on claim 1 or 2 is a printing system with advertisement publishing function characterized in that the print main data is supplied from an electronic equipment.

The invention as described in claim 4 premised on any one of claims 1 to 3 is a printing system with advertisement publishing function characterized in that the print main data is supplied through communication means.

The invention as described in claim 5 premised on any one of claims 1 to 4 is a printing system with advertisement publishing function characterized in that the storing means stores a plurality of advertisement data, and the signal processing means generates the printing data by combining the print main data with the advertisement data randomly selected of the plurality of advertisement data.

The invention as described in claim 6 premised on any one of claims 1 to 5 is a printing system with advertisement publishing function characterized in that the storing means stores a plurality of advertisement data, and the signal processing means generates the printing data by combining the print main data with the advertisement data selected with a user's desired kind from the plurality of advertisement data.

The invention as described in claim 7 premised on any one of claims 1 to 5 is a printing system with advertisement publishing function characterized in that the storing means stores a plurality of advertisement data, and the signal processing means generates the printing data by combining the print main data with the advertisement data selected with a business kind of a business corporation from the plurality of advertisement data.

The invention as described in claim 8 premised on any one of claims 1 to 5 is a printing system with advertisement publishing function characterized in that the storing means stores a plurality of advertisement data, and the signal processing means generates the printing data by combining the print main data with the advertisement data selected with a user's or business corporation's address from the plurality of advertisement data.

The invention as described in claim 9 premised on any one of claims 1 to 5 is a printing system with advertisement publishing function characterized in that the storing means stores a plurality of advertisement data, and the signal processing means generates the printing data by combining the print main data with the advertisement data selected with a business corporation's business area from the plurality of advertisement data.

The invention as described in claim 10 premised on any one of claims 1 to 9 is a printing system with advertisement publishing function further characterized by accounting means for generating accounting data to charge an advertiser with advertisement fee according as the printing system prints based on the advertisement data of the advertiser.

The invention as described in claim 11 premised on claim 10 is a printing system with advertisement publishing function characterized in that the accounting means generates another accounting data for decreasing rental fee to a user of the printing system with advertisement publishing function in connection with generating the accounting data for charging the advertiser.

The invention as described in claim 12 premised on claim 2 is a printing system with advertisement publishing function characterized in that the signal processing means generates the printing data with deletion of already printed advertisement data on the printing paper to feed it to the printing means for printing when the reading means reads the original with the already printed advertisement data.

The invention as described in claim 13 premised on claim 2 is a printing system with advertisement publishing function characterized in that the signal processing means generates the printing data with deletion of already printed advertisement data on the printing paper, and combination with the advertisement data in the storing means to feed it to the printing means for printing when the reading means reads the original with the already printed advertisement data.

The invention as described in claim 14 premised on claim 2 is a printing system with advertisement publishing function characterized in that the signal processing means takes the other advertisement data associated with already printed advertisement data on the printing paper out of the storing means to feed it to the printing means as the printing data for printing when the reading means reads the original with the already printed advertisement data.

The invention as described in claim 15 premised on claim 4 is a printing system with advertisement publishing function characterized in that the communication means is provided with transmission means for transmitting the print main data read by the reading means.

The invention as described in claim 16 premised on claim 15 is a printing system with advertisement publishing function characterized in that the signal processing means generates transmission data with deletion of already printed advertisement data from the print main data to feed it to the transmission means so as to transmit the transmission data when the reading means reads the original with the already printed advertisement data.

The invention as described in claim 17 premised on claim 15 is a printing system with advertisement publishing function characterized in that the signal processing means generates transmission data with deletion of already printed advertisement data from the print main data, and combination with the advertisement data in the storing means to feed it to the transmission means so as to transmit the transmission data when the reading means reads the original with the already printed advertisement data.

The invention as described in claim 18 premised on any one of claims 1 to 17 is a printing system with advertisement publishing function characterized in that the storing means updates the advertisement data.

The invention as described in claim 19 premised on claim 18 is a printing system with advertisement publishing function characterized in that the storing means updates the advertisement data by storing the advertisement data supplied from an external equipment through a communication line.

The invention as described in claim 20 premised on any one of claims 1 to 19 is a printing system with advertisement publishing function characterized in that the storing means stores information of print hysteresis.

The invention as described in claim 21 premised on any one of claims 1 to 20 is a printing system with advertisement publishing function characterized in that the storing means is provided with writing means for writing the print hysteresis information into an external storing medium.

The invention as described in claim 22 premised on any one of claims 1 to 20 is a printing system with advertisement publishing function characterized in that the storing means transmits the print hysteresis information into an external equipment through a communication line.

The invention as described in claim 23 premised on any one of claims 1 to 22 is a printing system with advertisement publishing function characterized in that the signal processing means generates the printing data by decreasing the print main data and combining the decreased print main data with the dvertisement data.

The invention as described in claim 24 premised on any one of claims 2 to 23 is a printing system with advertisement publishing function characterized in that the signal processing means generates the printing data with deletion of already printed advertisement data from the print main data and then enlargement of the data without advertisement data when the reading means reads the original with the already printed advertisement data.

The invention as described in claim 25 premised on any one of claims 1 to 24 is a printing system with advertisement publishing function characterized in that the signal processing means prints favorable treatment information for a user in connection with printing advertisement.

The invention as described in claim 26 premised on claim 1 is a printing system with advertisement publishing function characterized in that the signal processing means stores at least the print main data of the printing data comprising the print main data and the advertisement data into the storing means.

The invention as described in claim 27 premised on claim 17 is a printing system with advertisement publishing function characterized in that the signal processing means stores the transmission data into the storing means as hysteresis data.

The printing system with advertisement publishing function as constituted like the above mentioned can print with attaching advertisement based on the advertisement data stored in the storing means on a printing paper when copying an original, printing based on print main data, or printing based on data transmitted through communication.

Furthermore, in the advertisement printing process of the present invention, a useful advertisement or a detailed advertisement can be printed, or printing with randomly selecting advertisement can be processed. Thereby, a user can receive a useful and much advertisement information at any time, or an advertiser can obtain a new advertisement-propaganda environment.

Also, the user can also delete the advertisement and copy only the print main data without advertisement when copying the original with printed advertisement, and thus prevent troublesome problem in connection with publishing the advertisement from occurring in advance.

The printing system of the present invention is provided with the accounting means in connection with the advertisement publishing and printing, thereby enabling the user of the present system to be given reduction of rental fee and the advertiser to be exactly charged in accordance with quantity of the advertisement publishing.

In addition, the present invention provides extremely new advertisement publishing means to the advertiser by further various kind of functions. Hereinafter, the best mode for carrying out the present invention will be explained in more detail.

## Brief Description of the Drawings

In the drawing,

Fig. 1 is a block diagram showing a constitution of a copying machine as the first preferred embodiment;
Fig. 2 is a drawing showing a file structure of advertisement data and management data, respectively;
Fig. 3 is a drawing showing a constitution of accounting data;
Figs. 4(a) and 4(b) are drawings explaining a condition in which advertisement information is printed onto a printing paper;
Figs. 5(a) and 5(b) are drawings explaining another condition in which the advertisement information is printed onto a printing paper;
Figs. 6(a), 6(b) and 6(c) are drawings explaining further condition in which the advertisement information is printed onto a printing paper;
Fig. 7 is a block diagram showing a constitution of a copying machine as the second preferred embodiment;
Fig. 8 is a block diagram showing a constitution of a printer as the third preferred embodiment;
Fig. 9 is a block diagram showing a constitution of a printer as the fourth preferred embodiment; and
Fig. 10 is a block diagram showing a constitution of a facsimile terminal equipment as the fifth preferred embodiment.

## Detailed Description

Hereinafter, the preferred embodiments of the present invention will be explained with reference to the drawings.

### (First Embodiment)

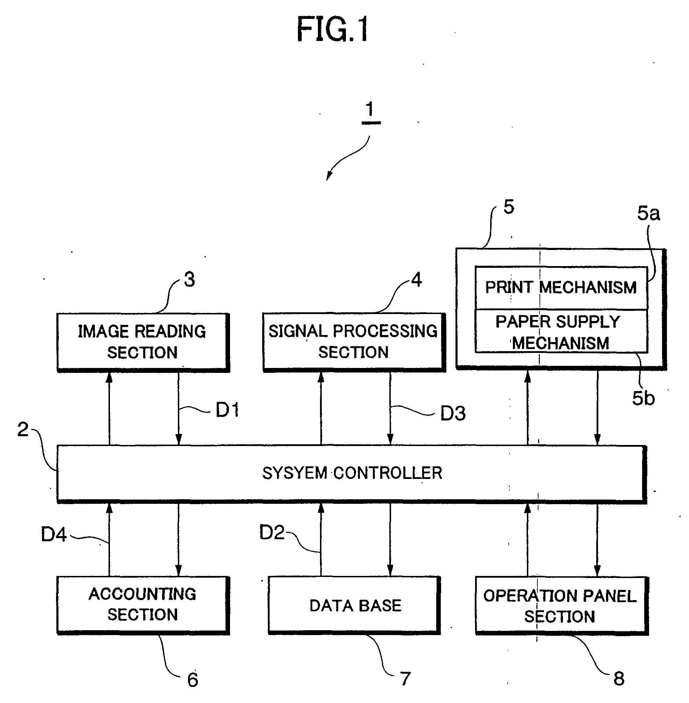

The first embodiment will be explained with reference to Figs. 1-6. The present embodiment relates to a copying machine with an advertisement publishing function.

In Fig. 1, a copying machine 1 of the present embodiment is provided with a system controller 2 including a microprocessor unit(MPU), an image reading section 3, a signal processing section 4, an output mechanism 5, an accounting section 6, a database 7 and an operation panel section 8.

The system controller 2 puts an overall function of the copying machine 1 under a centralized control of itself by executing predetermined system programs in the database 7.

The image reading section 3 reads information described in an original loaded or mounted on an original locating plate by means of an optical system, wherein the optically read out information is photoelectric-transferred by means of a photoelectric transfer component such as a line sensor or a two-dimensional image component, and further is converted into printing main digital data (hereinafter referred to as "image data") D1 to be supplied to the system controller 2.

The signal processing section 4 processes the image data D1 fed through the system controller 2 and advertisement data D2 fed from the data base 7 with digital signals, wherein printing data D3 for printing on a printing paper is generated to be fed to the output mechanism 5 through the system controller 2.

The output mechanism 5 comprises a print mechanism 5a and a paper supply mechanism 5b. The print mechanism 5a controls a print head based on the printing data D3, and thereby prints images and/or characters corresponding with the printing data D3. The paper supply mechanism 5b carries one sheet of plural printing papers stored in a tray to the print mechanism 5a every carrying, and performs a printing work cooperating with the print mechanism 5a.

Moreover, the present copying machine 1 is provided with the paper supply mechanism 5b using separate type printing papers, but successive paper such as roll paper may be used in the paper supply mechanism 5b, which may be supplied to the print mechanism 5a.

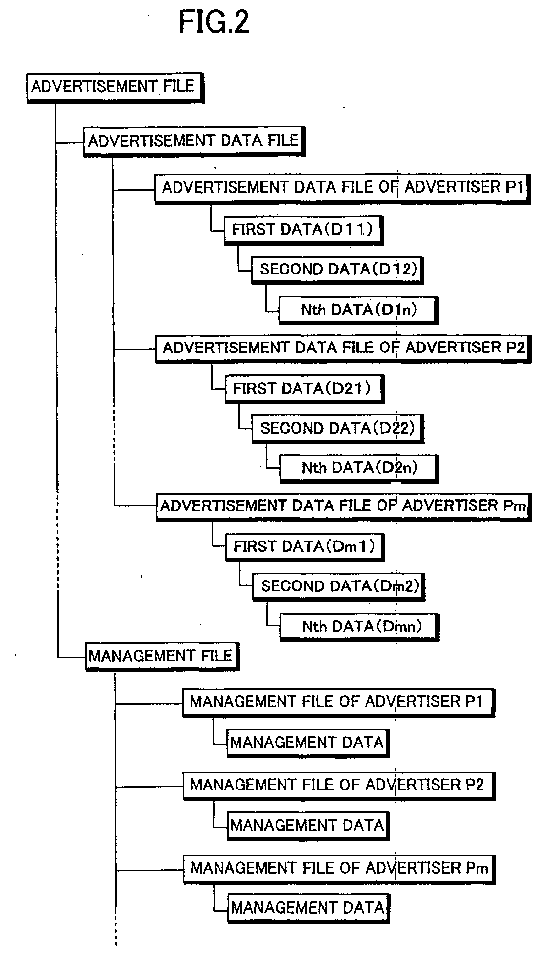

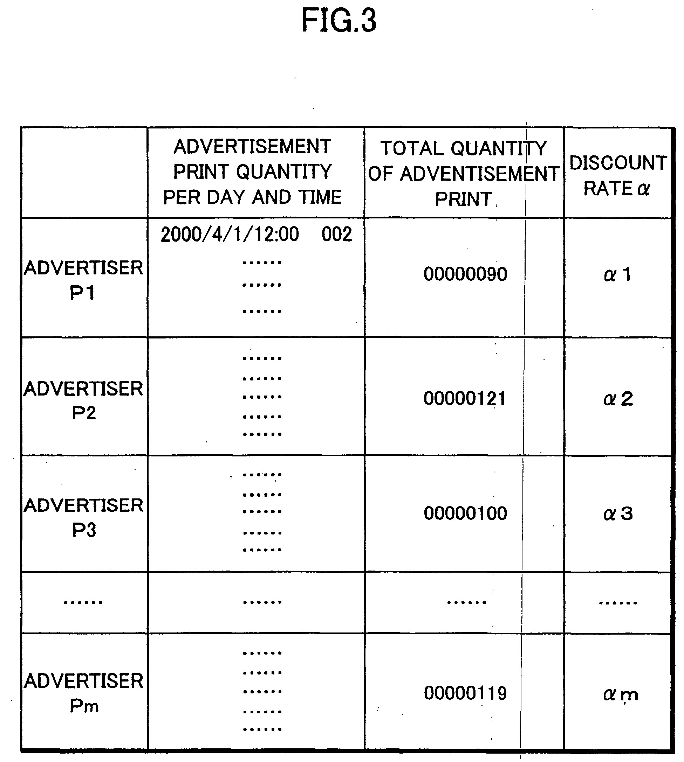

The database 7 comprises a large capacity of hard disc device, wherein the advertisement data D2 and a various kind of management data is stored in files as shown in Figs. 2 and 3. The hard disc device may be a removable type or stationary type.

In the case that the database 7 is formed with the removable hard disc device, a system manager can obtain data stored in the hard disc device which has been already mounted by taking the hard disc device out and replacing the already mounted removable hard disc device with a new removable hard disc device. In addition, the new removable hard disc device enables the data such as the advertisement data and the programs the system controller 2 executes to be renewed.

In the case that the database 7 is formed with the stationary hard disc device, the system manager can obtain data stored in the stationary hard disc device according to copying them into an external storing medium such as a floppy disc, and also can write new data and program stored in the external storing medium such as CD (compact disc) into the stationary hard disc device to renew and add the data such as the advertisement data and the program the system controller 2 executes.

The accounting section 6 generates management data such as rental fee data regarding copying quantity caused by the user's usage, and advertisement fee to be charged to an advertiser, and stores them in the database 7, a detailed explanation of which will be described hereinafter.

The operation panel section 8 comprises operation means including a key board or a touch panel for a desired input operation of the user, and display means for displaying information such as an operation condition and an operation menu of the present copying machine 1.

Next, the function of the present copying machine 1 will be described. The following function is realized under the condition that the system controller 2 executes predetermined system programs stored in the database 7.

When the user loads or mounts a desired original onto the original locating plate of the image reading section 3, and instructs to start the copying work by means of the operation panel section 8, the image reading section 3 optically reads and converts the information described in the original into the image data 1 to feed it to the system controller 2. Further, the image data D1 is forwarded to the signal processing section 4 by the system controller 2.

The signal processing section 4 decreases a data area of the image data D1 by using a decrease magnification with a predetermined aspect ratio corresponding to a size of the printing paper, and thereby generates digitally decreased image data D1'. In other words, the aspect ratio between each aspect size of the original and the printing paper is calculated, and thereafter the area of image data is decreased with the decrease magnification based on the data of calculated aspect ratio, so that a blank space for printing the advertisement explained later can be generated on the printing paper.

Moreover, the function of signal processing section 4 of the present copying machine 1 is not only to set the decrease magnification based on the size of the original and the printing paper, but also to determine the decrease magnification (or enlargement magnification) according to the user's selection instruction, based on an area of substantially described data portion in the original to be decided and a size of the printing paper, so as to generate the blank space for printing the advertisement.

In addition, the printing data D3 consisting of the advertisement data D2 and the image data D1'is generated by combining (or merging) the advertisement data D2 fed from the database 7 and the image data D1'.

Here, the advertisement data D2 is stored in the database 7 with a form of file as shown in Fig. 2. More specifically, an advertisement file including an advertisement data file and a management file is stored therein, wherein the advertisement data D2 is stored as data included in the advertisement data file.

In other words, the advertisement data file are separately made every individual advertiser of plural advertisers P1-Pm, wherein the advertisement data D11-Dmn supplied from each advertiser correspond therewith. Also, each advertisement data D11-Dmn is managed in files with a stratified structure. Further, the advertisement data file of each advertiser P1-Pm is classified by identification data showing a category of business of the advertiser.

As a typified example, the advertisement data file of the advertiser P1 will be explained. The advertisement data file of the advertiser P1 is provided with the first to Nth data D11-D1n under the stratified structure as advertisement data comprising image data and character data.

Likewise, the advertisement data files of the remaining advertisers P2-Pm also are provided with the stratified first to Nth data(D21-D2n)-(Dm1-Dmn).

The system controller 2 takes one of the advertisement data D11-Dmn out by means of a random selection, and adds an incidental data Dsx for identifying the advertiser and the advertisement data to the taken out data, and thereby generates the above-mentioned advertisement data D2 to supply it to the signal processing section 4.

As a typified example, explained will be the case that the system controller 2 takes the first data D11 in the advertisement data file of the advertiser P1 out by the random selection. Firstly, the incidental data is generated which comprises data IDP1 for identifying the advertiser P1, data IDD11 for identifying the first data D11, and date IDD12-IDD1n for showing that the lower data D12-Dln exists than the first data D11 with dependence on the first data D11 and for identifying each lower data D12-D1n. Next, the incidental data Dsx is added to the first data D11 to generate the advertisement data D2 (D11,Dsx), and then the generated advertisement data D2 is fed to the signal processing section 4.

The signal processing section 4 merges the first data D11 of the advertisement data D2 and the decreased image data D1' together, and further converts the incidental data Dsx into QR code data to add it into the merged data as mentioned above, so that the printing data D3 can be generated.

Next; the printing data D3 is fed from the signal processing section 4 to the print mechanism 5a, and then fed to the print head mounted on the print mechanism 5a, where it is printed on a printing paper supplied from the paper supply mechanism 5b.

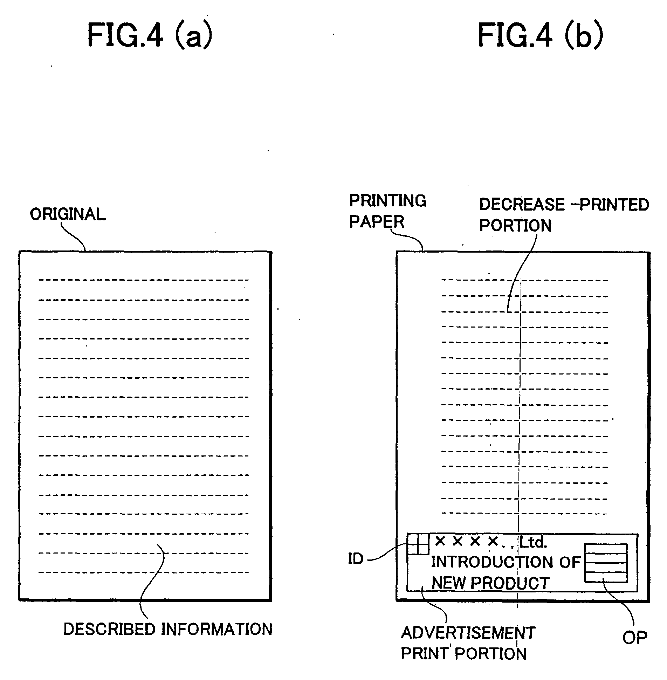

Hereby, when the original as shown in Fig. 4 (a) is copied, the printing with the advertisement as shown in Fig. 4(b) is performed on the printing paper.

Specifically, the information described in the original as shown in Fig. 4(a) is entirely decreased and printed into one part of the printing paper of Fig. 4(b), wherein a blank space made by the decrease is used for displaying the advertisement based on the advertisement data D2.

Additionally, the following data is printed in the advertisement part according to the identification data IDP1 and IDD11 of the above mentioned incidental data Dsx, i.e., the identification code pattern (for example, QR code pattern) ID for indicating the advertiser and the facts that its advertisement is printed here and that the advertisement information of the first data D11 is printed here, a guidance showing that the other advertisement pattern is prepared in accordance with the data IDD12-IDD1n with the identification code pattern (for example, QR code pattern) OP associated with the guidance.

After such a copying work, the accounting section 6 counts the number of sheets printed in the copying work, and generates accounting data for charging the user as a rental fee, and further charging the advertiser as an advertisement fee wherein the advertisement of the advertiser was printed on the printing paper. The accounting data D4 is forwarded to the database 7, and is stored and managed in the management file as shown in Fig. 2.

A management algorithm of the accounting data will be described in more detail. The database 7 stores the management file as shown in Fig. 2 therein, where the management file of the individual advertiser P1-Pm is provided and followed by the management data.

As shown in Fig. 3, each management data of the individual advertiser P1-Pm comprises advertisement print quantity data for indicating the date and time when the print was performed and the number of sheets where the advertisement is printed, total quantity data for indicating the total number of sheets where the advertisement was printed within a predetermined time period, and data of discount rate a for indicating the discount rate of the individual advertiser. In the management data, stored as the accounting data is the advertisement print quantity per day and time and the total quantity of advertisement print for charging the advertiser as the advertisement fee.

Moreover, although not shown in the drawings, data of the number of sheets the user used for copying work within the predetermined time period is stored in another management file for the user in order to charge the user as the usage rate.

When a system manager of a leasing company which rented the user the present copying machine 1 through a leasing contract performs a maintenance within the above predetermined time period, the accounting section 6 decreases the rental fee in correspondence with the advertisement fee from the normal rental fee of the copying machine based on the total number of sheets, namely the decreased rate is charged to the user as the rental fee.

The rate W charged from the leasing company to the user is calculated by the following formula,

$$W = U \times \beta - (N1 \times \alpha 1 + N2 \times \alpha 2 + \cdots\cdots + Nm \times \alpha m)$$

wherein N1-Nm represents the time number of print for the individual advertisement of the advertisers P1-Pm (the number of times when the advertisement data is published and printed on printing papers), $\alpha 1$-$\alpha m$ represents the discount rate every advertiser p1-Pm for giving the user some advantage as thanks for allowing the advertisement to be printed on the printing paper, U represents the total number of sheets upon which the user printed the advertisement within the predetermined time period, and $\beta$ represents the rental fee per one sheet upon which the user printed it. Moreover, such a calculating method is individually determined through each leasing contract.

Whether or not, the present copying machine 1 decreases the rental fee to the user according to the fact that the user put the advertisement upon the printing paper.

In such a way, the present copying machine has an excellent function, wherein the user can obtain much advertisement information, and the advertiser can catch much chances for distributing their own advertisement information. Further, as mentioned above, the present system can punctually give the user the merit of decrease of the rental fee according to the number of times of printing. Moreover, there is no problem that a specified advertisement only is published since the advertisement data is printed on the printing paper by the random selection, thereby enabling the advertisement publishing to be efficiently performed.

If the system manager of the leasing company renews the advertisement data in the database 7 at the stage of maintenance, more updated advertisement can be published on the printing paper.

Also, in the case that the user who made a leasing contract is a business corporation, the advertisement data relating to the kind of business of the corporation may be stored in the database 7, so that the advertisement with high usefulness for the corporation can be published.

Likewise, stored in the database 7 may be advertisement data within the area where the business corporation having the present copying machine is located, or where the business corporation performs the business, so that the advertisement with high usefulness for the corporation can be published.

Meanwhile, setup means may be provided which instructs to enable the system controller 2 to randomly select just advertisement with high usefulness for the user who made the leasing contract, wherein the database 7 can store advertisement data of a various kind of business. That is, the system manager sets only advertisement data with high usefulness for the user into the setup means at the stage of leasing contract or maintenance, wherein the system controller 2 selects only advertisement data file of the individual advertiser having identification data corresponding with setup information fed from the setup means, thereby enabling the system constitution to randomly select just the advertisement data with high usefulness.

In addition, the system may allow the user to select the user's desired kind of advertisement from the operation panel section 8.

Next, explained will be the function of the present copying machine at the stage when a plurality of originals are copied.

Each original is automatically carried to the original locating plate with predetermined timing by an auto-paper-supply mechanism (not shown) mounted on the image reading section 3. Thereby, each original is sequentially copied. Each when each original is copied on the printing paper, the system controller 2 randomly selects and takes out the advertisement data of the database 7, wherein the respective decreased image data D1' generated by decreasing the image data D1 read out from each original by the signal processing section 4, and the randomly selected advertisement data 2 are merged, thereby generating plural printing data D3. Then, the printing mechanism 5a prints these printing data D3 on the plural printing papers. Thereafter, the accounting section 6 performs the accounting process to store the accounting data into the database 7.

In such a way, the randomly selected advertisements, which are different from each other, are printed upon each printing paper carried from the paper supply mechanism 5b. Accordingly, the advertisement information can be efficiently distributed, and the user also can obtain much advertisement information.

On the other hand, in the case that one original is copied upon a plurality of printing papers also, the system controller 2 randomly selects the advertisement data as mentioned above, the randomly selected and each different advertisement is printed, and performs the accounting process.

Accordingly, in the case that one original is copied upon a plurality of printing papers also, the advertisement information can be efficiently distributed, and the user also can obtain much advertisement information.

Next, explained will be the function of the case that the present copying machine 1 again copies the printing paper with advertisement already published by the former printing thereon.

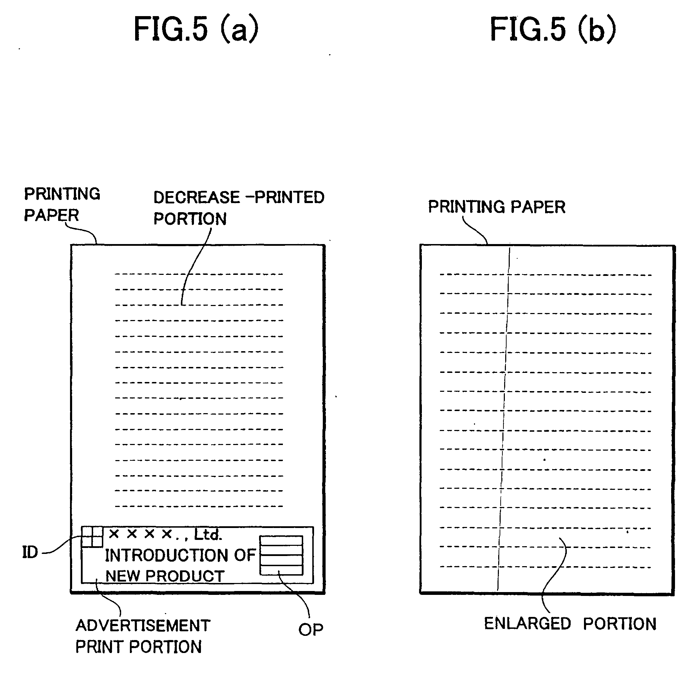

Namely, when the user copies the printing paper with the advertisement thereon as an original after obtaining the sheet on which the advertisement has already been printed as shown in Fig. 5(a), the image reading section 3 optically reads the sheet with the advertisement thereon, and then feeds the image data D1 to the signal processing section 4 through the system controller 2.

The signal processing section 4 determines whether the data of identification code pattern ID is included in the image data D1. In the example of Fig. 5(a) where the copy is repeated, of course, the identification code pattern has already printed, and therefore the signal processing section 4 confirms the existence of the identification code pattern, namely, it is determined that the original supplied for copying has an advertisement therein.

When the existence of the identification code pattern ID is confirmed, the printing data D3 is generated so as not to print the advertisement.

Incidentally, since the identification code pattern ID is not attached on the original as shown in Fig. 4(a), the printing data D3 to attach the advertisement is generated under the determination of the signal processing section 4 that the identification code pattern is not attached.

In short, the signal processing section 4 generates the printing data D3 to print with or without advertisement under the determining condition of existence or not of the identification code pattern ID.

After confirming the existence of the identification code pattern ID, the printing data D3 is generated as follows. Firstly, data of the area corresponding with printed area of the advertisement is deleted from the image data D1. The deleted area is determined based on the information of the identification code pattern ID. Next, an aspect ratio between an aspect area of the image data D1, where the advertisement data is deleted, and an aspect area of the printing paper is calculated, and then an enlargement ratio is determined based on the aspect ratio. According to the enlargement ratio, the image data D1 is digitally enlarged, thereby generating the printing data D3.

Lastly, the print mechanism 5a prints based on the printing data D3 upon the printing paper carried from the paper supply mechanism, so that the copying without advertisement can be performed as shown in Fig. 5 (b).

Thereby, the original as shown in Fig. 4(a) can be recovered, and if necessary, which can be distributed as a formal copy.

In the case that a plurality of copying is performed using an original of the sheet with the advertisement as shown in Fig. 5(a) also, the signal processing section 4 deletes the part of advertisement data from the image data D1, and then enlarge the remaining data part, likewise to output the sheet without advertisement as shown in Fig. 5(b).

Additionally, in the case that a plurality of originals with different advertisement thereon are sequentially printed also, the signal processing section 4 confirms the existence of the identification code pattern ID, and deletes the advertisement data from the image data D1 of each original and enlarge the remaining data part, if any, so that the copying without advertisement can be performed over plural printing papers.

Thus, the present copying machine 1 has an excellent function that the original can be restored to its original state when the copying is again performed using the sheet with the advertisement already printed thereon by the former copying as an original.

Moreover, although it is described above that the sheet with the advertisement is again copied with deleting the advertisement, the sheet with the advertisement may be copied as it is, without deleting the advertisement, as well as the conventional copying machine. In short, the contents of the sheet with the advertisement may be transferred onto the other printing paper without any change.

Additionally, when copying again the sheet with the advertisement, in addition to the process of deleting the data of advertisement part, the advertisement data stored in the database 7 may be newly selected and taken out, and then be replaced with the deleted data to generate the printing data D3 for printing. In other words, when copying the sheet where the advertisement has already been printed, the advertisement may be printed based on another advertisement data stored in the database 7 without deleting the advertisement.

However, in the above case, it is desired that the user can select as to whether the advertisement should be deleted or replaced through the operation panel section 8.

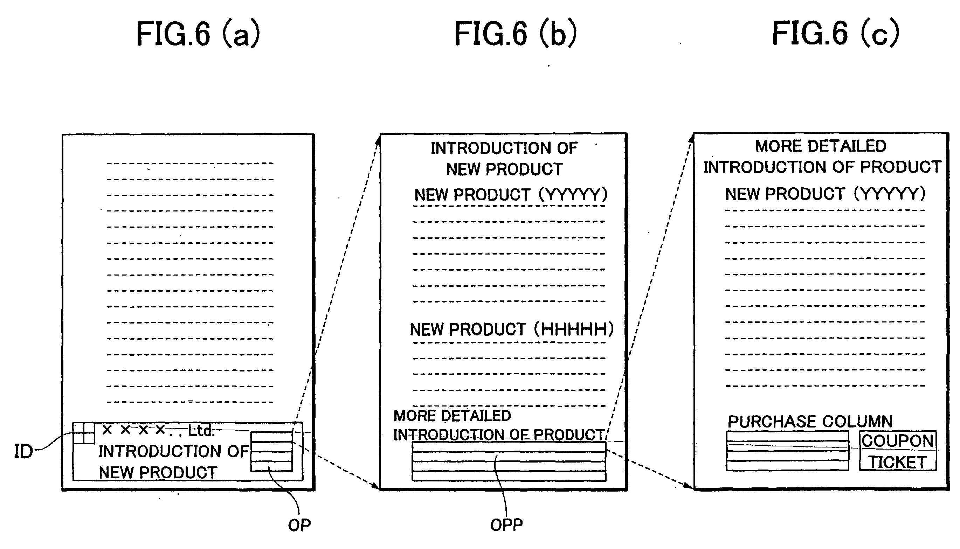

Next, the condition of utilization of the sheet with the advertisement as shown in Figs. 4(b) and 5(a) will be further explained with reference to Figs. 6(a)-6 (c).

When the user mounts the sheet with the advertisement as shown in Fig. 6(a) upon the original locating plate of the image reading section 3, and selects the item, "request of detailed data" from the operation menu displayed on the operation panel section 8, the present copying machine 1 enters an operation mode of the data request.

In this operation mode, the image reading section 3 optically reads the sheet with the printed advertisement thereon, and feeds the obtained image data D1 into the signal processing section 4.

In the signal processing section 4, it is checked whether the data of identification code pattern OP exists in the image data D1. If existed, the contents of the identification code pattern OP is analyzed, and a result thereof is displayed on the operation panel section 8.

When the user selects and designates the desired contents from the analyzed result, the system controller 2 obtains the designated advertisement data from the database 7, and feeds it to the signal processing section 4.

For example, when the identification code pattern OP for identifying the second data D12 of the advertiser P1 as shown in Fig. 2 is selected and designated by the user, the second data D12 is fed to the signal processing section 4 as the advertisement data.

Then, the signal processing section 4 feeds the second data D12 to the print mechanism 5a as printing data D3. Thereby, as shown in Fig. 6(b), more detailed contents of advertisement is printed in the printing paper, and supplied to the user. In the case that more detailed advertisement data is stored in the database 7 than the contents as shown in Fig. 6(b), a guidance indicating that the more detailed data exists as the lower layer data and the identification code pattern OPP corresponding with the guidance are printed.

When the user mounts the sheet as shown in Fig. 6(b) upon the original locating plate of the image reading section 3, and selects the item, "request of detailed data" from the operation menu displayed on the operation panel section 8 likewise, the present copying machine 1 enters an operation mode of the data request.

In this operation mode also likewise, the image reading section 3 optically reads the sheet with the printed advertisement thereon, and feeds the obtained image data D1 into the signal processing section 4.

In the signal processing section 4, it is checked whether the data of identification code pattern OPP exists in the image data D1. If existed, the contents of the identification code pattern OPP is analyzed, and a result thereof is displayed on the operation panel section 8.

When the user selects and designates the desired contents from the analyzed result, the system controller 2 obtains the designated advertisement data from the database 7, and feeds it to the signal processing section 4.

For example, when the identification code pattern OPP for identifying the Nth data D1n of the advertiser P1 as shown in Fig. 2 is selected and designated by the user, the Nth data D1n is fed to the signal processing section 4 as the advertisement data.

Then, the signal processing section 4 feeds the Nth data D1n to the print mechanism 5a as printing data D3. Thereby, as shown in Fig. 6(c), more detailed contents of advertisement is printed in the printing paper, and supplied to the user.

In the case that more detailed advertisement data is stored in the database 7 than the contents as shown in Fig. 6(c), a guidance indicating that the more detailed data exists as the lower layer data and the identification code pattern OPP corresponding with the guidance are printed. On the other hand, if the Nth data D1n is data of the lowest layer, the identification code pattern is printed no more.

Further, if information of a coupon ticket is included in the Nth data Din, the coupon ticket as shown in Fig. 6(c) is printed. When the user purchases the advertiser's product after watching the advertisement, the user passes the coupon ticket to a seller to buy the product with a reduced price.

In such a way, the present copying machine 1 prints identification code patterns showing an abstract through detailed contents of the advertisement so as to allow the user to select one of them, thereby causing an excellent effect that a various type of advertisement information can be given to the user. Also, printing of coupon ticket information causes an effect such as enhancement of advertisement effect for the advertiser.

Moreover, in the present embodiment, the identification code patterns OP and OPP are read by the image reading section 3 of the printing machine 1 when presenting the detailed advertisement information. However, another optical reader such as a bar code reader may be used, wherein the user scans the identification code pattern OP, OPP by the optical reader, and the scanned data is fed to the signal processing section 4, thereby enabling the detailed advertisement to be printed.

Further, instead of the identification code pattern OP, OPP, a so-called text code comprising a letter-alphanumeric combination may be printed. In this case, the signal processing section 4 need be provided with a character recognition function for recognizing the printed text code, and analyze the text code by the character recognition function, so that the same result as analysis of the identification code pattern OP, OPP can be caused.

Although the above-mentioned explanation describes that the signal processing section 4 generates the printing data D3, and prints the printing data D3 by the print mechanism 5a, thereafter completing a set of copying function, the present invention is not limited to this example. The database 7 may store the data signal-processed by the signal processing section 4 as hysteresis data. More specifically, the image data D1 as the original data or the printing data D3 including the advertisement data and the incidental data is stored in the database 7 as the hysteresis data.

In this case, it is preferable to store at least the printing data D3 of the image data D1 and the printing data D3 in the database 7 according to the selection of the user.

Additionally, in this case, it may be stopped according to the selection of the user to print by means of the print mechanism 5a, wherein at least the printing data D3 of the image data D1 and the printing data D3 may be stored in the database 7.

The following effects can be obtained by the present copying machine. In the case that a large amount of copying sheets are printed, for example, the advertisement information is printed upon the large amount of printing papers, wherein there may occur that preservation characteristic of the advertisement information deteriorates, and also all of the printed advertisements are too much to read for the user. However, such problems can be resolved by storing the hysteresis data, i.e., electronic data including the advertising data in the database 7. Specifically, as the result, the user can display the advertisement on a screen with the way of supplying the hysteresis data as the picture data to a picture equipment, can edit the hysteresis data with the computer, and copy the advertisement information into an external storing medium such as a floppy disc to carry it, thereby causing the improvement of the user's convenience.

**(Second Embodiment)**

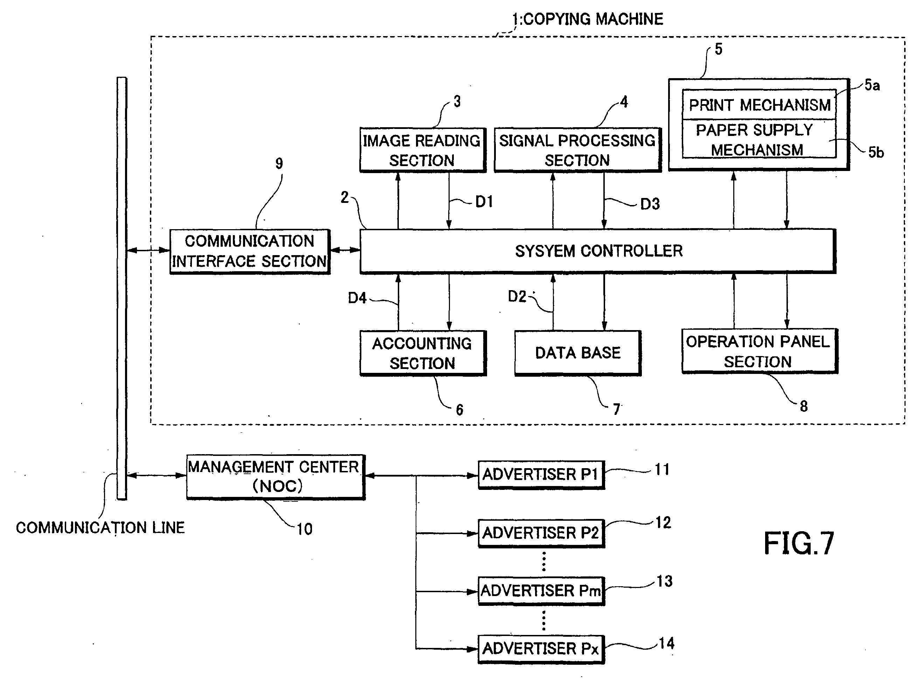

Next, the second embodiment regarding the copying machine will be explained with reference to Fig. 7. Moreover, the present embodiment is provided with a communication function on the copying machine of the first embodiment. In Fig. 7, the identical or corresponding parts with ones of Fig. 1 are shown with the same reference numerals.

The copying machine 1 is provided with a communication interface section 9 such as a modem. When connecting the communication interface section 9 with a business communication line, a various kind of data can be transferred between itself and a management center 10 provided with a database server having a communication facility conducting a distribution of advertisement information.

In this case, the management center 10 transfers a various kind of data also with information terminal devices 11-14 which are set in residing places of many advertisers P1-Px through the business communication lines.

When the advertisers P1-Px transmit their desired advertisement data from their terminal devices 11-14 to the management center 10, the management center 10 manages the advertisement data therein. Further, the advertisement data is transmitted to each side of copying machine with a form of transmission data.

In such a way, when the transmission data is transmitted to the copying machine 1, the system controller 2 receives the transmission data through the communication interface section 9, then which is stored (downloaded) as new or additional advertisement data with a form of file in the database 7 as shown in Fig. 2, wherein the process for printing advertisements and accounting process are performed as described in the first embodiment.

When the management center 10 requests to obtain accounting file data stored in the database 7 with the copying machine, the system controller 2 transmits the accounting file data in the database 7 to the management center 10 through the communication interface section 9.

The management center 10 analyzes the accounting data every advertiser P1-Px, and charges advertisement fee to each side of information terminal device of advertiser.

In such away, since the present copying machine 1 is provided with the communication interface section, thereby communicating with the management center 10 managing the accounting information in connection with distributing advertisement, a large amount of and a various advertisement information can be rapidly and efficiently given to the user.

Moreover, although a detail thereof is omitted, the copying machine 1 of the present embodiment includes the same advertisement printing function as the first embodiment other than the communication function. Although, in the above mentioned description, it is described that the signal processing section 4 generates the printing data D3, and the print mechanism 5a prints based on the printing data D3, thereby a set of copying operation is completed, the present invention is not limited in this case. Namely, as well as the copying machine of the first embodiment, the data which the signal processing section 4 performed signal processing thereof may be stored as hysteresis data in the database 7.

**(Third embodiment)**

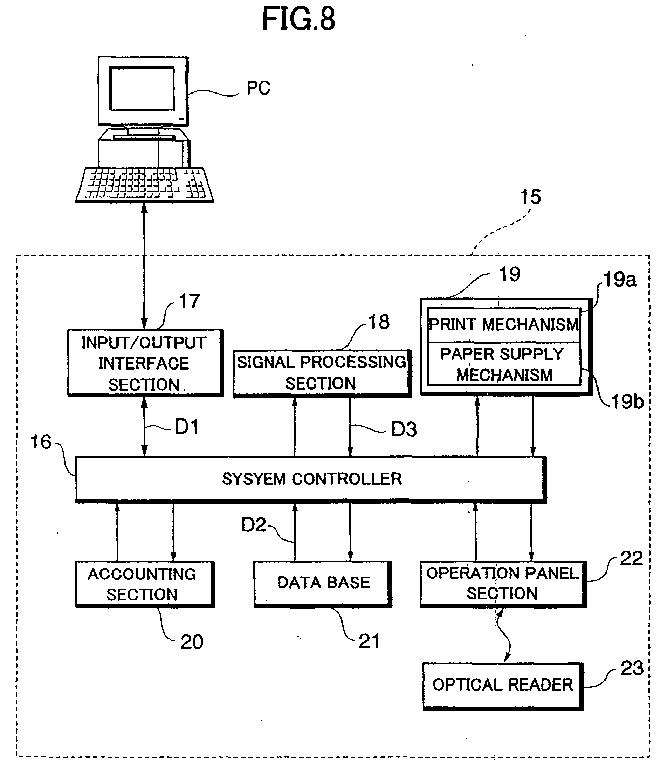

Next, the third embodiment of the present invention will be explained with reference to Fig. 8. The present embodiment relates to a printer for automatically inserting and printing advertisement information onto printing paper.

In Fig. 8, a printer 15 of the present embodiment is provided with a system controller 16 including a microprocessor unit(MPU), an image reading section 3, an input/output interface section 17, a signal processing section 18, an output mechanism 19, an accounting section 20, a database 21 and an operation panel section 22, and an optical reader 23.

The system controller 16 puts an overall function of the printer 15 under a centralized control of itself by executing predetermined system programs.

The input/output interface section 17 is provided with a parallel port, a USB port, and a serial port, and connected with an electronic equipment such as a personal computer through these ports.

The signal processing section 18 processes the printing data D1 fed from the personal computer through the input/output interface section 17 and advertisement data D2 fed from the data base 21 with digital signals, wherein printing data D3 for printing on a printing paper is generated to be fed to the output mechanism 19 through the system controller 16.

The output mechanism 19 comprises a print mechanism 19a and a paper supply mechanism 19b. The print mechanism 19a controls a print head based on the printing data D3, and thereby prints images and/or characters corresponding with the printing data D3 on the printing paper. The paper supply mechanism 19b carries one sheet of plural printing papers stored in a tray to the print mechanism 19a every carrying, and performs a printing work cooperating with the print mechanism 19a.

Moreover, the present printer 15 is provided with the paper supply mechanism 19b using separate type printing papers, but successive paper such as roll paper may be used in the paper supply mechanism 19b, which may be supplied to the print mechanism 19a.

The database 21 comprises relatively large capacity of removable memory media, wherein the advertisement data D2 and a various kind of management data is stored with files in the same fashion as shown in Figs. 2 and 3.

A system manager can obtain data stored in the removable memory media which has been already mounted by taking the removable memory media out and replacing the already mounted removable memory media with a new removable memory media. In addition, the new removable memory media enables the data such as the advertisement data and the programs the system controller 16 executes to be renewed.

The accounting section 20 generates management data such as rental fee data regarding printing quantity caused by the user's usage, and advertisement fee to be charged to an advertiser, and stores them in the database 21.

The operation panel section 22 comprises operation means including a key board or a touch panel for a desired input operation of the user, and display means for displaying information such as an operation condition and an operation menu of the present printer 15.

The optical reader 23 comprises a device for optically reading character or symbol such as a so-called barcode reader.

Next, the function of the present printer 15 will be described. The following function is realized under the condition that the system controller 16 executes predetermined system programs stored in the database 21.

When the user outputs the desired printing data D1 from his/her personal computer, the input/output interface section 17 receives the printing data D1 to feed it to the signal processing section 18.

The signal processing section 18 decreases a data area of the image data D1 by using a decrease magnification with a predetermined aspect ratio corresponding to a size of the printing paper, and thereby generates digitally decreased image data D1'. In other words, the signal processing section 18 process the decrease with the decrease magnification of the predetermined aspect ratio according to a size of the printing paper, a form of which is set by a personal computer, thereby generating digitally decreased data D1'.

Additionally, the printing data D3 comprising the advertisement data D2 and the data D1' is generated by combining (merging) the data D1' and the advertisement data D2 supplied from the database 21.

Also, the printing data D3 is generated in the same way as the generation by the signal processing section 4 of the first and second embodiments. The data D3 having the data D1' and the advertisement data D2 which the system controller 16 randomly selects is generated, wherein the incidental data for printing the identification code patterns ID, OP, and OPP also is included in the printing data D3.

Next, the printing data D3 is fed from the signal processing section 18 to the print mechanism 19a, and then fed to the print head mounted on the print mechanism 19a, where it is printed on a printing paper supplied from the paper supply mechanism 19b.

Hereby, the printing with the advertisement as shown in Fig. 4(b) is performed on the printing paper.

Specifically, the printing data D1 is entirely digitally decreased and printed into one part of the printing paper as shown in Fig. 4(b), wherein a blank space part made by the decrease is used for displaying the advertisement based on the advertisement data D2.

Additionally, in the same fashion as shown in Fig. 4(b), the identification code pattern (for exempla, QR code pattern) ID, and the guidance showing that the other advertisement pattern is further prepared, and the identification code pattern (for example, QR code pattern) OP associated with the guidance are printed on this advertisement part.

After such a printing work, the accounting section 20 counts the number of sheets printed in the printing work, and generates accounting data for charging the user as a rental fee, and further charging the advertiser as an advertisement fee wherein the advertisement data of the advertiser was printed on the printing paper. The accounting data D4 is forwarded to the database 21, and is stored and managed in the management file in the same fashion as shown in Fig. 2.

Moreover, the accounting section 20 processes the same accounting as the accounting section 6 of the first and second embodiments. Namely, generated is the accounting data regarding a user's leasing fee, reduced fee thereof, advertisement fee of an advertiser, which are stored as hysteresis data in the database 21.

In such a way, the present printer 15 has an excellent function, wherein the user can obtain much advertisement information, and the advertiser can catch much chances for distributing their own advertisement information. Further, as mentioned above, the present system can punctually give the user the merit of decrease of the rental fee according to the number of times of printing. Moreover, there is no problem that a specified advertisement only is published since the advertisement data is printed on the printing paper by the random selection, thereby enabling the advertisement publishing to be efficiently performed.

If the system manager of the leasing company renews the advertisement data in the database 21 at the stage of maintenance, more updated advertisement data can be published on the printing paper.

Also, in the case that the user who made a leasing contract is a business corporation, the advertisement data relating to the kind of business of the corporation may be stored in the database 21, so that the advertisement with high usefulness for the corporation can be published.

Likewise, stored in the database 21 may be advertisement data within the area where the business corporation having the present printer is located, or where the business corporation performs the business, so that the advertisement with high usefulness for the corporation can be published.

Meanwhile, setup means may be provided which instructs to enable the system controller 16 to randomly select just advertisement with high usefulness for the user who made the leasing contract, wherein the database 21 can store advertisement data of a various kind of business. That is, the system manager sets only advertisement data with high usefulness for the user into the setup means at the stage of leasing contract or maintenance, wherein the system controller 16 selects only advertisement data file of the individual advertiser having identification data corresponding with setup information fed from the setup means, thereby enabling the system constitution to randomly select just the advertisement data with high usefulness.

In addition, the system may allow the user to select the user's desired kind of advertisement data from the operation panel section 22.

In the same fashion as shown in Figs. 4(b) and 6(b), the identification code patterns OP, OPP are printed on the printing paper. When the user reads the identification code patterns with the optical reader 23, the system controller 16 obtains more detailed advertisement data corresponding to the identification code patterns OP, OPP from the database 21 to feed it to the signal processing section 18. Thereafter, the advertisement data is fed as the printing data D3 to the print mechanism 19a to be printed. Therefore, the present system can present the user with various advertisement information.

Also, through providing a coupon ticket to be printed, the advertiser can be given an excellent advertisement-propaganda function.

Although the above-mentioned explanation describes that the signal processing section 18 generates the printing data D3, and prints the printing data D3 by the print mechanism 19a, thereafter completing a set of printing function, the present invention is not limited to this example. The database 21 may store the data signal-processed by the signal processing section 18 as hysteresis data as well as the copying machine in the first embodiment.

**(Fourth Embodiment)**

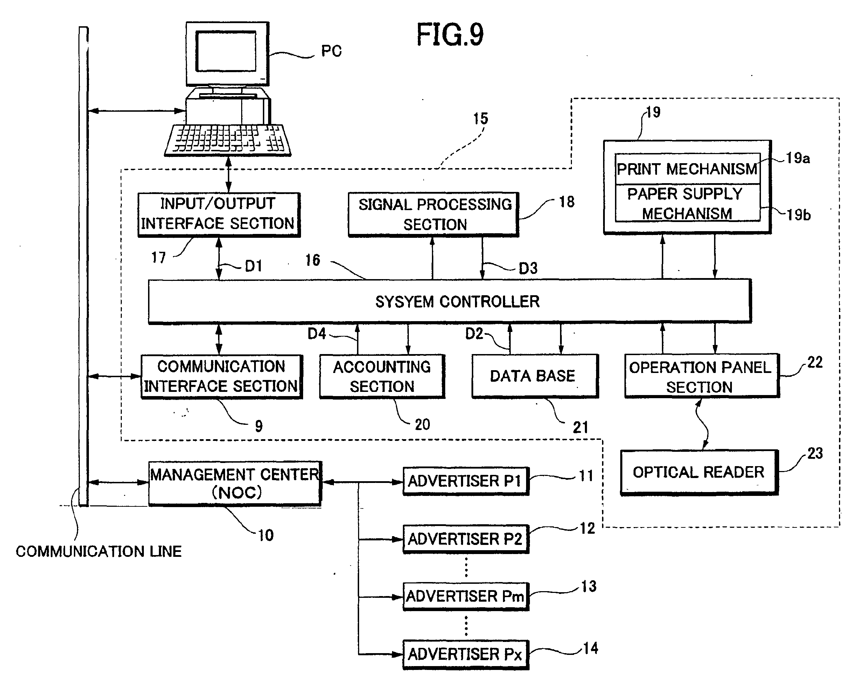

Next, the other embodiment regarding the printer will be explained with reference to Fig. 9. This printer is provided with a communication function on the printer of the third embodiment. In Fig. 9, the same reference numerals are given the identical or corresponding elements with Figs. 7 and 8.

The printer 15 of the present embodiment is provided with a communication interface section 9 such as a modem. When connecting the communication interface section 9 with a business communication line, a various kind of data can be transferred between itself and a management center 10 provided with a database server having a communication facility conducting a distribution of advertisement information.

In this case, the management center 10 transfers a various kind of data also with information terminal devices 11-14 which are set in residing places of many advertisers P1-Px through the business communication lines.

When the advertisers P1-Px transmit their desired advertisement data from their terminal devices 11-14 to the management center 10, the management center 10 manages the advertisement data therein. Further, the advertisement data is transmitted to each side of the printer 15 with a form of transmission data.

In such a way, when the transmission data is transmitted to the printer 15, the system controller 16 receives the transmission data through the communication interface section 9, then which is stored (downloaded) as new or additional advertisement data with a form of file in the database 16 as shown in Fig. 2, wherein the process for printing advertisements and accounting process are performed as described in the third embodiment.

In other words, the printer 15 processes the advertisement printing in the same fashion as the above explanation with Fig. 4 or 6.

When the management center 10 requests to obtain accounting file data stored in the database 21 with the printer 15, the system controller 16 transmits the accounting file data in the database 21 to the management center 10 through the communication interface section 9.

The management center 10 analyzes the accounting data every advertiser P1-Px, and charges advertisement fee to each side of information terminal device of advertiser.

In such a way, since the present printer 15 is provided with the communication interface section 9, thereby communicating with the management center 10 managing the accounting information in connection with distributing advertisement, a large amount of and a various advertisement information can be rapidly and efficiently given to the user.

Moreover, although a detail thereof is omitted, the printer 15 of the present embodiment includes the same advertisement printing function as the first embodiment other than the communication function.

Although, in the above mentioned description, it is described that the signal processing section 18 generates the printing data D3, and the print mechanism 19a prints based on the printing data D3, thereby a set of copying operation is completed, the present invention is not limited in this case. Namely, as well as the copying machine of the first embodiment, the data which the signal processing section 18 performed signal processing thereof may be stored as hysteresis data in the database 21.

**(Fifth Embodiment)**

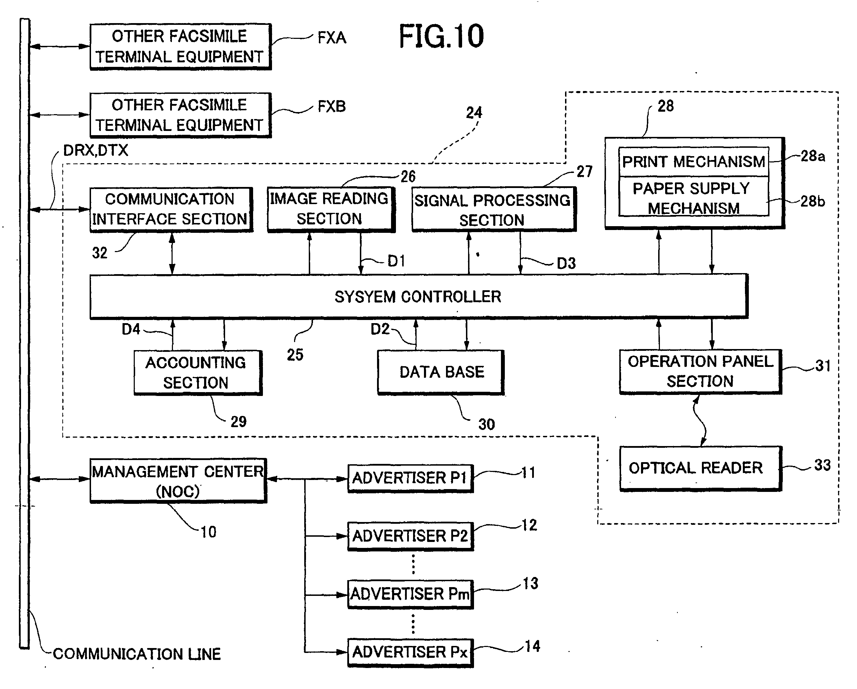

Next, the fifth embodiment of the present invention will be explained with reference to Fig. 10. Moreover, the present embodiment relates to a facsimile terminal equipment (hereinafter referred to as "fax equipment") which automatically inserts and prints the advertisement information on the printing paper.

In Fig. 10, a fax equipment 24 of the present embodiment is provided with a system controller 25 including a microprocessor unit(MPU), an image reading section 26, a signal processing section 27, an output mechanism 28, an accounting section 29, a database 30, an operation panel section 31, a communication interface section 32, and an optical reader 33.

The system controller 25 puts an overall function of the fax equipment 24 under a centralized control of itself by executing predetermined system programs.

The image reading section 26 reads information described in an original loaded or mounted on an original locating plate by means of an optical system, wherein the optically read out information is converted into digital image data D1 by means of a photoelectric transfer component such as a line sensor or a two-dimensional image component to be fed to the system controller 25.

The signal processing section 27 converts the above-mentioned image data D1 fed through the system controller 25 into transmission data DTX, and transmits it to a communication line side through the communication interface section 32, so that it is transmitted to the other fax equipment FXA, FXB a user desires.

Facsimile data DRX from the other fax equipment FXA, FXB is received by the communication interface section 32, which is further fed to the signal processing section 27 through the system controller 25.

When receiving the facsimile data DRX, the signal processing section 27 processes decrease of the data according to a size of the printing paper, and generates the decreased data DRX' so as to generate a blank space for printing an advertisement on the printing paper.

The equipment 24 digitally signal-processes the decreased data DRX', and the advertisement data D2 supplied from the database 30, thereby generates the printing data D3 for printing on the printing paper, and feeding it to the output mechanism 28 through the system controller 25.

The output mechanism 28 comprises a print mechanism 28a and a paper supply mechanism 28b. The print mechanism 28a controls a print head based on the printing data D3, and thereby prints images and/or characters corresponding with the printing data D3. The paper supply mechanism 28b carries one sheet of plural printing papers stored in a tray to the print mechanism 28a every carrying, and performs a printing work cooperating with the print mechanism 28a.

The database 30 comprises a large capacity of hard disc device, wherein the advertisement data D2 and a various kind of management data is stored in files in the same fashion as shown in Figs. 2 and 3. Also, the database 30 is formed with a removable type or stationary type of device.

In the case that the database 30 is formed with the removable hard disc device, a system manager can obtain data stored in the hard disc device which has been already mounted by taking the hard disc device out and replacing the already mounted removable hard disc device with a new removable hard disc device. In addition, the new removable hard disc device enables the data such as the advertisement data and the programs the system controller 25 executes to be renewed.

In the case that the database 30 is formed with the stationary hard disc device, the system manager can obtain data stored in the stationary hard disc device according to copying them into an external storing medium such as a floppy disc, and also can write new data and program stored in the external storing medium such as CD (compact disc) into the stationary hard disc device to renew and add the data such as the advertisement data and the program the system controller 25 executes.

The accounting section 29 generates management data such as rental fee data regarding copying quantity caused by the user's usage, and advertisement fee to be charged to an advertiser, and stores them in the database 30.

The operation panel section 31 comprises operation means including a key board or a touch panel for a desired input operation of the user, and display means for displaying information such as an operation condition and an operation menu of the present fax equipment 24.

The optical reader 33 comprises a so-called barcode reader.

Next, the function of the present fax equipment 24 will be explained.

First, explained is the function of the equipment 24 at the stage of receiving the data transmitted from the other fax equipment. When the equipment 24 receives the facsimile data DRX from the other fax equipment FXA, FXB with the communication interface section 32, and then feeds it to the signal processing section 27, the signal processing section 27 generates the printing data D3 based on the facsimile data DRX.

More specifically, the signal processing section 27 decreases the facsimile data DRX with decrease magnification of predetermined aspect ratio in communication with the size of the printing paper, and generates the decreased image data DRX'. Next, the system controller 30 randomly selects and obtains the advertisement data managed in a form of file as shown in Fig. 2, and feeds the advertisement data D2 to the signal processing section 27. Moreover, the advertisement data D2 is fed to the signal processing section 27 in the same fashion as the copying machine shown in the first and second embodiments. Next, the signal processing section 27 merges the image data DRX' and the advertisement data D2 to generate the printing data D3, then feeding it to the print mechanism 28a.

Lastly, the print mechanism 28a prints on the printing paper carried from the paper supply mechanism 28b based on the printing data D3.

Thereby, for example, if the fax equipment 24 receives the original as shown in Fig. 4(a) from the other fax equipment FXA, FXB, it outputs the original data by way of printing an advertisement onto a blank space of the printing paper as shown in Fig. 4(b).

Additionally, in the same fashion as shown in Fig. 4(b), the identification code pattern (for example, QR code pattern) ID, the guidance showing that the other advertisement pattern is further prepared, and the identification code pattern (for example, QR code pattern) OP associated with the guidance are printed on this advertisement part.

After such a printing work, the accounting section 29 counts the number of sheets printed in the printing work, and generates accounting data for charging the user as a rental fee, and further charging the advertiser as an advertisement fee wherein the advertisement data of the advertiser was printed on the printing paper. The accounting data D4 is forwarded to the database 30, and is stored and managed in the management file in the same fashion as shown in Fig. 2.

Moreover, the accounting section 29 processes the same accounting as the accounting section 6 of the first and second embodiments. Namely, generated is the accounting data regarding a user's leasing fee, reduced fee thereof, advertisement fee of an advertiser, which are stored as hysteresis data in the database 30.

Next, explained will be the function of the case that the present fax equipment 24 transmits through using the printing paper with advertisement already published by the former printing thereon as transmission original to the other fax equipment FXA, FXB.

Namely, when the user instructs to transmit the printing paper with the advertisement thereon as an original after obtaining the sheet on which the advertisement has already been printed as shown in Fig. 5(a), the image reading section 26 optically reads the sheet with the advertisement thereon, and then feeds the image data D1 to the signal processing section 27 through the system controller 25.

The signal processing section 27 determines whether the data of identification code pattern ID is included in the image data D1. In the case that the identification code pattern has already printed, the signal processing section 27 confirms the existence of the identification code pattern ID, namely, it is determined that the original supplied for the transmission has an advertisement therein. When the existence of the identification code pattern ID is confirmed, the data of advertisement part is deleted, the only original data without advertisement is transmitted.

Namely, the signal processing section 27 deletes data of the area corresponding with printed area of the from the image data D1. The deleted area is determined based on the information of the identification code pattern ID. Next, an area of the original data part is checked from the remaining image data D1', where the advertisement data is deleted, and an enlargement ratio is determined in accordance with the area. According to the enlargement ratio, the image data D1' is digitally enlarged, thereby generating the transmission data DTX.

Lastly, the transmission data DTX is transmitted to the other fax equipment through the communication interface section 32.

Thereby, the other fax equipment receives the transmission data DTX with deletion of advertisement data, namely can output only an original data.

Additionally, when faxing the sheet with the advertisement, in addition to the process of deleting the data of advertisement part, the advertisement data stored in the database 7 may be newly selected and taken out, and then be replaced with the deleted data to generate the transmission data D3 for transmitting. In other words, in the above-mentioned case, the transmission data DTX with deletion of advertisement data is not transmitted, but the data generated by combining (merging) the remaining image data D1' with deletion of the advertisement data with another advertisement data stored in the database 30 may be transmitted as the transmission data DTX.

However, when the sheet with the printed advertisement is transmitted by fax, it is desirable that the user selects as to whether the advertisement data should be replaced or just deleted with the operation panel section 31.

In the same fashion as shown in Figs. 4(b) and 6(b), the identification code patterns OP, OPP are printed on the printing paper in the present fax equipment 24.

When the user scans the sheet attached with the identification code pattern OP by the optical reader 33, the system controller 25 obtains more detailed advertisement data corresponding to the identification code patterns OP, OPP from the database 30 to feed it to the signal processing section 27. Thereafter, the advertisement data is fed as the printing data D3 to the print mechanism 28a to be printed. Also, the identification code pattern OPP is printed in the detailed advertisement printing data, wherein the user scans the identification code pattern OPP by the optical reader 33, and then the system controller 25 obtains more detailed advertisement data corresponding to the identification code pattern OPP from the database 30 and feeds it to the signal processing section 27. Thereafter, the advertisement data is fed to the print mechanism 28a as the advertisement data D3 to be printed. A coupon ticket also can be printed.

Therefore, the present fax equipment also can provide the user with a various kind of advertisement with level of an abstract to detailed contents.

Further, instead of the identification code pattern OP, OPP, a so-called text code comprising a letter-alphanumeric combination may be printed. In this case, the signal processing section 27 need be provided with a character recognition function for recognizing the printed text code, and analyze the text code by the character recognition function, so that the same result as analysis of the identification code pattern OP, OPP can be caused.

In such a way, the present fax equipment 24 has an excellent function, wherein the user can obtain much advertisement information, and the advertiser can catch much chances for distributing their own advertisement information. Further, as mentioned above, the present system can punctually give the user the merit of decrease of the rental fee according to the number of times of printing. Moreover, there is no problem that a specified advertisement only is published since the advertisement data is printed on the printing paper by the random selection, thereby enabling the advertisement publishing to be efficiently performed.

If the system manager of the leasing company renews the advertisement data in the database 30 at the stage of maintenance, more updated advertisement can be published on the printing paper.

Also, in the case that the user who made a leasing contract is a business corporation, the advertisement data relating to the kind of business of the corporation may be stored in the database 30, so that the advertisement with high usefulness for the corporation can be published.

Likewise, stored in the database 30 may be advertisement data within the area where the business corporation having the present fax equipment 24 is located, or where the business corporation performs the business, so that the advertisement with high usefulness for the corporation can be published.

Meanwhile, setup means may be provided which instructs to enable the system controller 25 to randomly select just advertisement with high usefulness for the user who made the leasing contract, wherein the database 30 can store advertisement data of a various kind of business. That is, the system manager sets only advertisement data with high usefulness for the user into the setup means at the stage of leasing contract or maintenance, wherein the system controller 25 selects only advertisement data file of the individual advertiser having identification data corresponding to setup information fed from the setup means, thereby enabling the system constitution to randomly select just the advertisement data with high usefulness.

In addition, the system may allow the user to select the user's desired kind of advertisement from the operation panel section 31.

Further, a various kind of data in the equipment 24 may be transferred with or from the management center 10 provided with a database server having a communication function for transmitting the advertisement information.

Namely, the present fax equipment 24 is connected with the management center 10 through the communication line as well as the printing machine 1 as shown in Fig. 7 or the printer 15 as shown in Fig. 9.

Moreover, the advertisement data can be updated through downloading the advertisement data transmitted from the management center 10 in the database 30, and also the accounting data stored in the database 30 can be transmitted as hysteresis data to the management center 10 according to the center's request.

In such a way, the present fax equipment 24 can present the user with a various kind of advertisement information, and the advertiser with efficient means for distributing the advertisement. Further, the same effect as the printing machine 1 and the printer 15 also can be expected.

Although it is described in the present embodiment that an advertisement is printed in the printing paper when receiving a facsimile, the transmission may be performed including advertising data in the data base 30.

In addition, although the first to fifth embodiments describe the copying machine, printer and fax equipment with advertisement publishing function as a dedicated machine, a complex machine with advertisement publishing function may be formed by adequately combining these constitutions.

Although the above-mentioned explanation describes that the signal processing section 27 generates the printing data D3, and prints the printing data D3 by the print mechanism 28a, thereafter completing a set of copying function, the present invention is not limited to this example. The database 30 may store the data signal-processed by the signal processing section 27 as hysteresis data as well as the copying machine of the first embodiment.

Further, the transmission data DTX also as transmitted to the other fax equipment may be stored as hysteresis data in the database 30. In other words, the transmission data DTX with or without the advertisement data may be stored as hysteresis data in the database 30.

**Possibility of Use on Industry**

The printing system with advertisement publishing function of the present invention is concerned with providing a user with a sheet having advertisement information to be printed in a blank space part of the original when printing original data upon the sheet. Therefore, the present system can provide the user with a various kind of advertisement information, and also an advertiser with a new environment for advertising or propaganda, namely, a system with a high possibility of use on industry. In addition, the present system can provide the user with printing data having no advertisement information by deleting an area of printed advertisement also, namely an official document for the user, thereby preventing the printing advertisement from causing a poison thereby in advance.

Also, the advertisement publishing function caused by the present invention is a new one with inventiveness, and gives the industry an extremely large and excellent effect.

**Claims**

1. A printing system with advertisement publishing function comprising:

    printing means for printing on a printing paper based on printing data;
    storing means for storing advertisement data;
    signal processing means for generating said printing data combining print main data and said advertisement data stored in said storing means when the print main data is supplied;

    wherein said printing means prints upon the printing paper based on said printing data generated by a combination of said advertisement data and said print main data, so that said printing paper can be printed attaching a printing portion based on said advertisement data to a printing portion based on said print main data.

2. The printing system with advertisement publishing function according to claim 1, further comprising:

reading means for reading an original to be copied, and thereby generating said print main data.

3. The printing system with advertisement publishing function according to claim 1 or 2, wherein said print main data is supplied from an electronic equipment.

4. The printing system with advertisement publishing function according to any one of claims 1-3, wherein said print main data is supplied through communication means.

5. The printing system with advertisement publishing function according to any one of claims 1-4, wherein said storing means stores a plurality of advertisement data, and said signal processing means generates said printing data by combining said print main data with said advertisement data randomly selected of said plurality of advertisement data.

6. The printing system with advertisement publishing function according to any one of claims 1-5, wherein said storing means stores a plurality of advertisement data, and said signal processing means generates said printing data by combining said print main data with said advertisement data selected with a user's desired kind from said plurality of advertisement data.

7. The printing system with advertisement publishing function according to any one of claims 1-5, wherein said storing means stores a plurality of advertisement data, and said signal processing means generates said printing data by combining said print main data with said advertisement data selected with a business kind of a business corporation from said plurality of advertisement data.

8. The printing system with advertisement publishing function according to any one of claims 1-5, wherein said storing means stores a plurality of advertisement data, and said signal processing means generates said printing data by combining said print main data with said advertisement data selected with a user's or business corporation's address from said plurality of advertisement data.

9. The printing system with advertisement publishing function according to any one of claims 1-5, wherein said storing means stores a plurality of advertisement data, and said signal processing means generates said printing data by combining said print main data with said advertisement data selected with a business corporation's business area from said plurality of advertisement data.

10. The printing system with advertisement publishing function according to any one of claims 1-9, further comprising: accounting means for generating accounting data to charge an advertiser with advertisement fee according as said printing system prints based on said advertisement data of said advertiser.

11. The printing system with advertisement publishing function according to claim 10, wherein said accounting means generates another accounting data for decreasing rental fee to a user of the printing system with advertisement publishing function in connection with generating said accounting data for charging the advertiser.

12. The printing system with advertisement publishing function according to claim 2, wherein said signal processing means generates said printing data with deletion of already printed advertisement data on the printing paper to feed it to said printing means for printing when said reading means reads the original with said already printed advertisement data.

13. The printing system with advertisement publishing function according to claim 2, wherein said signal processing means generates said printing data with deletion of already printed advertisement data on the printing paper, and combination with the advertisement data in said storing means to feed it to said printing means for printing when said reading means reads the original with said already printed advertisement data.

14. The printing system with advertisement publishing function according to claim 2, wherein said signal processing means takes the other advertisement data associated with already printed advertisement data on the printing paper out of said storing means to feed it to said printing means as said printing data for printing when said reading means reads the original with said already printed advertisement data.

15. The printing system with advertisement publishing function according to claim 4, wherein said communication means is provided with transmission means for transmitting the print main data read by said reading means.

16. The printing system with advertisement publishing function according to claim 15, wherein said signal processing means generates transmission data with deletion of already printed advertisement data from said print main data to feed it to said transmission means so as to transmit said transmission data when said reading means reads the original with said already printed advertisement data.

17. The printing system with advertisement publishing function according to claim 15, wherein said signal processing means generates transmission data with deletion of already printed advertisement data from said print main data, and combination with the advertisement data in said storing means to feed it to said transmission means so as to transmit said transmission data when said reading means reads the original with said already printed advertisement data.

18. The printing system with advertisement publishing function according to any one of claims 1-17, wherein said storing means updates said advertisement data.

19. The printing system with advertisement publishing function according to claim 18, wherein said storing means updates said advertisement data by storing said advertisement data supplied from an external equipment through a communication line.

20. The printing system with advertisement publishing function according to any one of claims 1-19, wherein said storing means stores information of print hysteresis.

21. The printing system with advertisement publishing function according to any one of claims 1-20, wherein said storing means is provided with writing means for writing said print hysteresis information into an external storing medium.

22. The printing system with advertisement publishing function according to any one of claims 1-20, wherein said storing means transmits said print hysteresis information into an external equipment through a communication line.

23. The printing system with advertisement publishing function according to any one of claims 1-22, wherein said signal processing means generates said printing data by decreasing said print main data and combining the decreased print main data with said advertisement data.

24. The printing system with advertisement publishing function according to any one of claims 2-23, wherein said signal processing means generates said printing data with deletion of already printed advertisement data from said print main data and then enlargement of said data without advertisement data when said reading means reads the original with said already printed advertisement data.

25. The printing system with advertisement publishing function according to any one of claims 1-24, wherein said signal processing means prints favorable treatment information for a user in connection with printing advertisement.

26. The printing system with advertisement publishing function according to claim 1, wherein said signal processing means stores at least said print main data of said printing data comprising said print main data and said advertisement data into said storing means.

27. The printing system with advertisement publishing function according to claim 17, wherein said signal processing means stores said transmission data into said storing means as hysteresis data.

# FIG.1

# FIG.2

```
ADVERTISEMENT FILE
    ADVERTISEMENT DATA FILE
        ADVERTISEMENT DATA FILE OF ADVERTISER P1
            FIRST DATA(D11)
                SECOND DATA(D12)
                    Nth DATA(D1n)
        ADVERTISEMENT DATA FILE OF ADVERTISER P2
            FIRST DATA(D21)
                SECOND DATA(D22)
                    Nth DATA(D2n)
        ADVERTISEMENT DATA FILE OF ADVERTISER Pm
            FIRST DATA(Dm1)
                SECOND DATA(Dm2)
                    Nth DATA(Dmn)
    MANAGEMENT FILE
        MANAGEMENT FILE OF ADVERTISER P1
            MANAGEMENT DATA
        MANAGEMENT FILE OF ADVERTISER P2
            MANAGEMENT DATA
        MANAGEMENT FILE OF ADVERTISER Pm
            MANAGEMENT DATA
```

# FIG.3

| | ADVERTISEMENT PRINT QUANTITY PER DAY AND TIME | TOTAL QUANTITY OF ADVENTISEMENT PRINT | DISCOUNT RATE $\alpha$ |
|---|---|---|---|
| ADVERTISER P1 | 2000/4/1/12:00 002 <br> ...... <br> ...... <br> ...... | 00000090 | $\alpha$ 1 |
| ADVERTISER P2 | ...... <br> ...... <br> ...... <br> ...... <br> ...... | 00000121 | $\alpha$ 2 |
| ADVERTISER P3 | ...... <br> ...... <br> ...... <br> ...... <br> ...... | 00000100 | $\alpha$ 3 |
| ...... | ...... | ...... | ...... |
| ADVERTISER Pm | ...... <br> ...... <br> ...... <br> ...... <br> ...... <br> ...... | 00000119 | $\alpha$ m |

# FIG.4 (a)

# FIG.4 (b)

ORIGINAL

PRINTING PAPER

DECREASE –PRINTED PORTION

DESCRIBED INFORMATION

ID

×××× . , Ltd.
INTRODUCTION OF
NEW PRODUCT

ADVERTISEMENT
PRINT PORTION

OP

# FIG.5 (a)

# FIG.5 (b)

PRINTING PAPER

DECREASE –PRINTED PORTION

ID

××××., Ltd.
INTRODUCTION OF NEW PRODUCT

ADVERTISEMENT PRINT PORTION

OP

PRINTING PAPER

ENLARGED PORTION

# FIG.6 (a)　　　FIG.6 (b)　　　FIG.6 (c)

FIG.6 (a):
ID
× × × × . , Ltd.
INTRODUCTION OF
NEW PRODUCT
OP

FIG.6 (b):
INTRODUCTION OF
NEW PRODUCT
NEW PRODUCT (YYYYY)

NEW PRODUCT (HHHHH)

MORE DETAILED
INTRODUCTION OF PRODUCT
OPP

FIG.6 (c):
MORE DETAILED
INTRODUCTION OF PRODUCT
NEW PRODUCT (YYYYY)

PURCHASE COLUMN
COUPON TICKET

EP 1 292 111 A1

1:COPYING MACHINE

FIG.7

# FIG.8

PC

15

19

19a

17

INPUT/OUTPUT
INTERFACE
SECTION

18

SIGNAL PROCESSING
SECTION

PRINT MECHANISM

PAPER SUPPLY
MECHANISM

19b

D1

D3

16

SYSYEM CONTROLLER

D2

ACCOUNTING
SECTION

DATA BASE

OPERATION PANEL
SECTION

22

20

21

OPTICAL READER

23

# FIG.9

EP 1 292 111 A1

# FIG.10

EP 1 292 111 A1

OTHER FACSIMILE TERMINAL EQUIPMENT — FXA

OTHER FACSIMILE TERMINAL EQUIPMENT — FXB

DRX,DTX

24

28

PRINT MECHANISM — 28a

PAPER SUPPLY MECHANISM — 28b

COMMUNICATION INTERFACE SECTION

IMAGE READING SECTION — 26

SIGNAL PROCESSING SECTION — 27

32

D1

D3

SYSYEM CONTROLLER

D4

25

D2

ACCOUNTING SECTION

DATA BASE

OPERATION PANEL SECTION — 31

29

30

MANAGEMENT CENTER (NOC)

ADVERTISER P1 — 11

OPTICAL READER — 33

10

ADVERTISER P2 — 12

ADVERTISER Pm — 13

ADVERTISER Px — 14

COMMUNICATION LINE

## INTERNATIONAL SEARCH REPORT

| International application No. |
| --- |
| PCT/JP00/03584 |

A. CLASSIFICATION OF SUBJECT MATTER
    Int.Cl⁷   H04N1/387, B41J29/38, B41J29/40, B41J21/00

According to International Patent Classification (IPC) or to both national classification and IPC

B. FIELDS SEARCHED

Minimum documentation searched (classification system followed by classification symbols)
    Int.Cl⁷   H04N1/38-1/393, B41J29/38-29/40

Documentation searched other than minimum documentation to the extent that such documents are included in the fields searched
    Jitsuyo Shinan Koho        1922-1996    Toroku Jitsuyo Shinan Koho  1994-2000
    Kokai Jitsuyo Shinan Koho  1971-2000    Jitsuyo Shinan Toroku Koho  1996-2000

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
|   | JP 11-355549, A (Sharp Corporation), 24 December, 1999 (24.12.99), |   |
| X | Full text; Figs. 1 to 42 | 1-9,15,18,19, 23,25,26 |
| Y | Full text; Figs. 1 to 42 (Family: none) | 10,11,20-22,27 |
|   | JP 11-261798 A (Sharp Corporation), 24 September, 1999 (24.09.99), |   |
| X | Full text; Figs. 1 to 86 | 1-9,15,18,19, 23,25,26 |
| Y | Full text; Figs. 1 to 86 (Family: none) | 10,11,20-22,27 |
|   | JP 10-320145 A (Ricoh Company, Ltd.), 04 December, 1998 (04.12.98), |   |
| X | Full text; Figs. 1 to 6 | 1-9,15,18,19, 23,25,26 |
| Y | Full text; Figs. 1 to 6 (Family: none) | 10,11,20-22,27 |

☒  Further documents are listed in the continuation of Box C.      ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance |   |   |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means |   |   |
| "P" | document published prior to the international filing date but later than the priority date claimed | "&" | document member of the same patent family |

| Date of the actual completion of the international search | Date of mailing of the international search report |
| --- | --- |
| 22 August, 2000 (22.08.00) | 05 September, 2000 (05.09.00) |

| Name and mailing address of the ISA/ | Authorized officer |
| --- | --- |
| Japanese Patent Office |   |
| Facsimile No. | Telephone No. |

Form PCT/ISA/210 (second sheet) (July 1992)

28

**EP 1 292 111 A1**

<table>
<tr><td colspan="3" align="center">INTERNATIONAL SEARCH REPORT</td><td colspan="2">International application No.<br><br>PCT/JP00/03584</td></tr>
</table>

| C (Continuation). DOCUMENTS CONSIDERED TO BE RELEVANT |||
|---|---|---|
| Category* | Citation of document, with indication, where appropriate, of the relevant passages | Relevant to claim No. |
| X | JP 9-90831 A (Fuji Xerox Co., Ltd.),<br>04 April, 1997 (04.04.97),<br>Full text; Figs. 1 to 4 | 1-9,15,18,19,<br>23,25,26 |
| Y | Full text; Figs. 1 to 4<br>(Family: none) | 10,11,20-22,27 |
| X | JP 8-256256 A (Fuji Xerox Co., Ltd.),<br>01 October, 1996 (01.10.96),<br>Full text; Figs. 1 to 34 | 1-9,15,18,19,<br>23,25,26 |
| Y | Full text; Figs. 1 to 34<br>(Family: none) | 10,11,20-22,27 |
| Y | JP 9-90832 A (Fuji Xerox Co., Ltd.),<br>04 April, 1997 (04.04.97),<br>Full text; Figs. 1 to 6   (Family: none) | 10,11 |
| Y | JP 63-299453 A (Toshiba Corporation),<br>06 December, 1988 (06.12.88),<br>Full text; Fig. 1   (Family: none) | 10,11 |
| Y | JP 11-129556 A (Ricoh Company, Ltd.),<br>18 May, 1999 (18.05.99),<br>Full text; Figs. 1 to 3   (Family: none) | 20-22,27 |
| A | JP 7-15603 A (NEC Corporation),<br>17 January, 1995 (17.01.95),<br>Full text; Figs. 1 to 3   (Family: none) | 1-27 |

Form PCT/ISA/210 (continuation of second sheet) (July 1992)